# EUROPEAN PATENT APPLICATION

(11) **EP 2 066 102 A2**
(43) Date of publication of application: **03.06.2009**
(21) Application number: 08168833.5
(22) Date of filing: 11.11.2008
(51) Int. Cl.: H04M 1/02, G06F 3/041, H04M 1/23

(54) **Portable electronic device with transparent touch control section**

(30) Priority: 27.11.2007 TW 96145042
(71) Applicant: ASUSTeK Computer Inc., Peitou,Taipei (TW)
(72) Inventor: Ke, Po-Jen, Taipei (TW); Li, Shiao-Feng, Taipei (TW); Hung, Hung-Chang, Taipei (TW)
(74) Representative: Viering, Jentschura & Partner

(57) **Abstract**

A portable electronic device includes a main body, a cover and a transparent touch control section. The main body has a function display section. The cover is pivotally connected with the main body and selectively folded against or unfolded away from the main body. The transparent touch control section is disposed on the cover. When the cover is folded against the main body, the function display section is visible through the transparent touch control section.

## Description

### RELATED APPLICATIONS

This application claims priority to Taiwan Application Serial Number 96145042, both filed November 27, 2007, which are herein incorporated by reference.

### BACKGROUND

### Field of Invention

The present invention relates to an electronic device. More particularly, the present invention relates to a portable electronic device.

### Description of Related Art

Conventional PDA phone or smart phone, which is equipped with a touch screen as its major operation interface, usually has a powerful computing capability but a relatively inconvenient way to make a phone call. In particular, a user usually needs to execute some software application before making a phone call. For the forgoing reasons, there is a need for improving the PDA phone or smart phone to have a more convenient way to make a phone call.

### SUMMARY

It is therefore an objective of the present invention to provide a portable electronic device.

In accordance with the foregoing and other objectives of the present invention, a portable electronic device includes a main body, a cover and a transparent touch control section. The main body has a function display section. The cover is pivotally connected with the main body and selectively folded against or unfolded away from the main body. The transparent touch control section is disposed on the cover. When the cover is folded against the main body, the function display section is visible through the transparent touch control section.

Thus, the present invention provides a portable electronic device having its main body and cover both equipped with a touch control section but share one common display screen. Therefore, the cover of the portable electronic device can be conveniently operated to achieve particular function, i.e. the cover has a transparent touch control section for dialing and making a phone call, without unfolding the cover and operating the touch display screen on the main body.

It is to be understood that both the foregoing general description and the following detailed description are by examples, and are intended to provide further explanation of the invention as claimed.

### BRIEF DESCRIPTION OF THE DRAWINGS

The accompanying drawings are included to provide a further understanding of the invention, and are incorporated in and constitute a part of this specification. The drawings illustrate embodiments of the invention and, together with the description, serve to explain the principles of the invention. In the drawings,
Fig. 1 illustrates a portable electronic device with its cover unfolded away from its main body according to one preferred embodiment of this invention;
Fig. 2 illustrates a portable electronic device with its cover folded against its main body according to one preferred embodiment of this invention;
Fig. 3 illustrates the portable electronic device in Fig. 2 with its cover housing removed; and
Fig. 4 illustrates a control block diagram of a portable electronic device according to one preferred embodiment of this invention.

### DESCRIPTION OF THE PREFERRED EMBODIMENTS

Reference will now be made in detail to the present preferred embodiments of the invention, examples of which are illustrated in the accompanying drawings. Wherever possible, the same reference numbers are used in the drawings and the description to refer to the same or like parts.

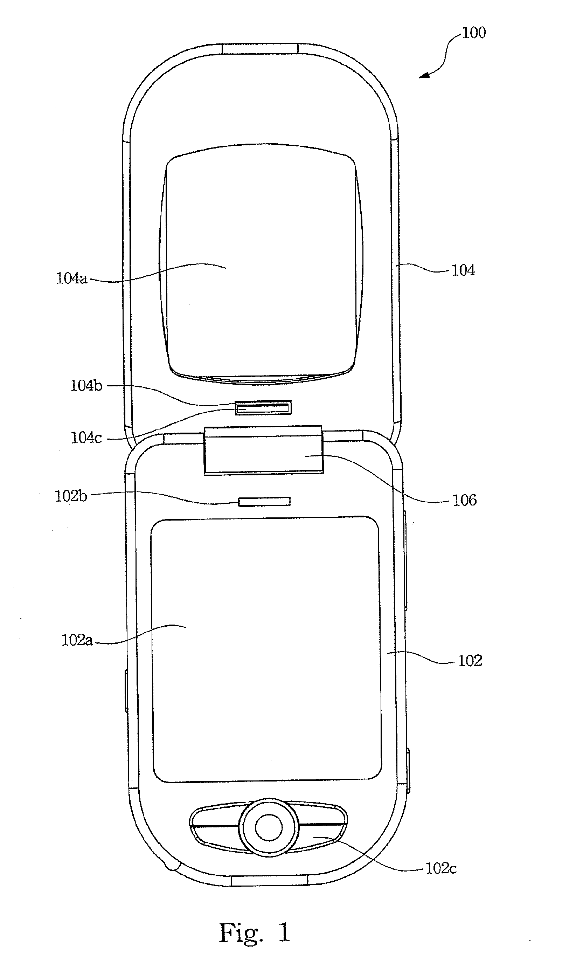

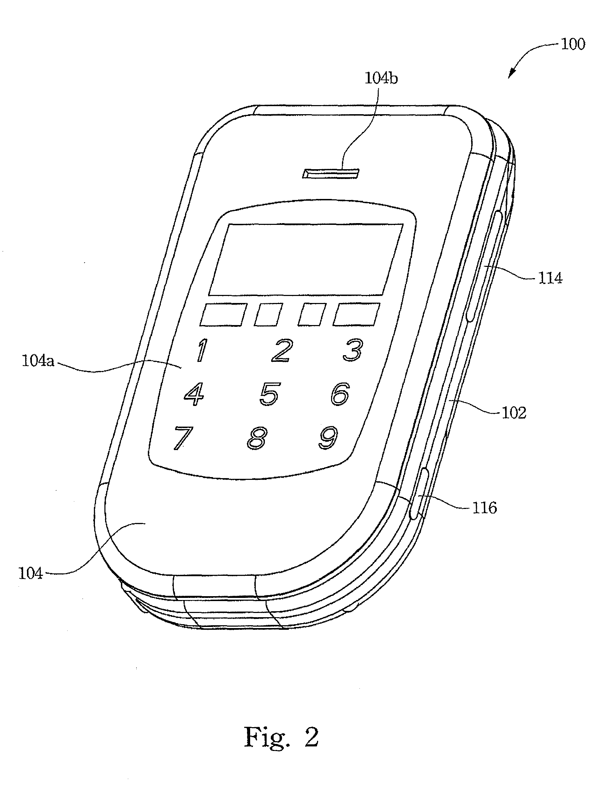

Fig. 1 illustrates a portable electronic device with its cover unfolded away from its main body according to one preferred embodiment of this invention. In this embodiment, the portable electronic device 100 is a PDA, smart phone or other types of portable electronic devices equipped with a telephone function. The portable electronic device 100 includes a main body 102 and a cover 104. The cover 104 is pivotally connected to the main body 102 by a hinge 106 such that the cover 104 can be swiveled to be selectively folded against the main body 102 (as illustrated in Fig. 2) or unfolded away from the main body 102 (as illustrated in Fig. 1).

In preferred embodiment of the present invention, the main body 102 has a touch display screen 102a as a function display section. When the cover 104 is unfolded away from the main body 102, the touch display screen 102a can be operated by a finger or a stylus to execute various functions of the portable electronic device. Or, a key group 102c can be employed to execute various functions of the portable electronic device. The touch display screen 102a can be a resistive touch display screen or a capacitive touch display screen. The main body 102 also has a sound through hole 102b for transmitting out sound, music or telephone communication generated within thereof.

The cover 104 includes a transparent touch control section 104a. When the cover is folded against the main body 102 (as illustrated in Fig. 2), the transparent touch control section 104a can be operated by a finger or a stylus to execute various functions of the portable electronic device. The transparent touch control section 104a can be a capacitive touch control section or a resistive touch control section. The cover 104 also has a sound through hole 104b, within which a sound-transmitting enhanced material 104c is filled. The sound-transmitting enhanced material 104c, i.e. a sponge, transmits sound with a good quality.

Fig. 2 illustrates a portable electronic device with its cover folded against its main body according to one preferred embodiment of this invention. When the cover 104 is folded against the main body 102, the transparent touch control section 104a is aligned with the touch display screen 102a in position, and the sound through hole 104b is aligned with the sound through hole 102b in position. Because the transparent touch control section 104a is aligned with the touch display screen 102a in position, what is displayed on the touch display screen 102a is also visible through the transparent touch control section 104a. And the transparent touch control section 104a can be touched by a finger or a stylus to execute various corresponding functions displayed by the touch display screen 102a.

For instances, when the cover 104 is folded against the main body 102 and the touch display screen 102a display telephone function keys, i.e. "0∼9", "#" and " *", a user may touch a corresponding area by a finger or a stylus on the transparent touch control section 104a to dial a phone number and hence make a phone call.

In addition, when the sound through hole 104b is aligned with the sound through hole 102b in position, sound generated by a speaker within the main body 102 can be transmitted via the sound through hole 102b and the sound-transmitting enhanced material 104c within the sound through hole 104b and then out of the portable electronic device. In this embodiment, the main body 102 further includes a volume-adjusting key 114 for adjusting the loudness of a sound generated within the main body 102 and a switch key 116 for selectively enabling or disabling the transparent touch control section 104a. When the transparent touch control section 104a is disabled, the transparent touch control section 104a could not be wrongly operated by an unintended touch.

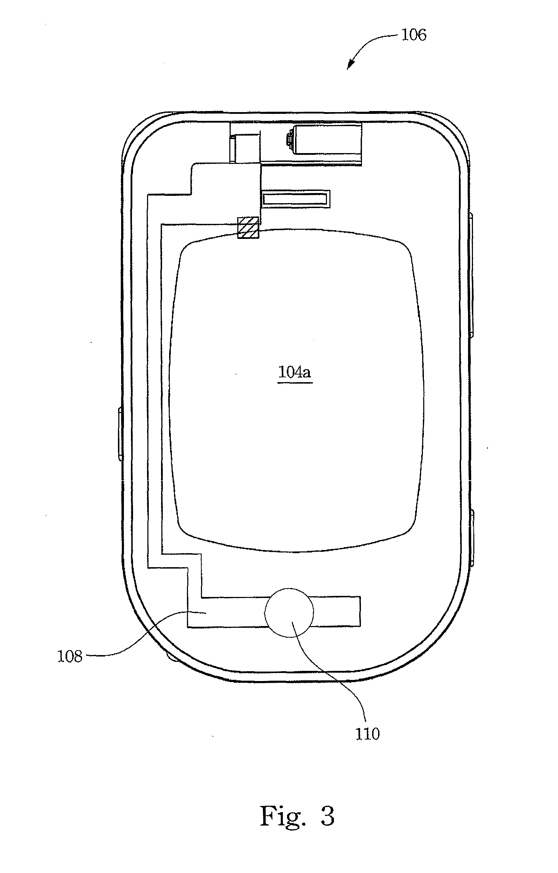

Fig. 3 illustrates the portable electronic device in Fig. 2 with its cover housing removed to disclose details within the cover 104. The cover 104 includes a connection cable 108 (flexible cable or flexible printed circuit board) with one end connected to the main body 102 via the hinge 106 and the other section connected to the transparent touch control section 104a and the vibrator 110.

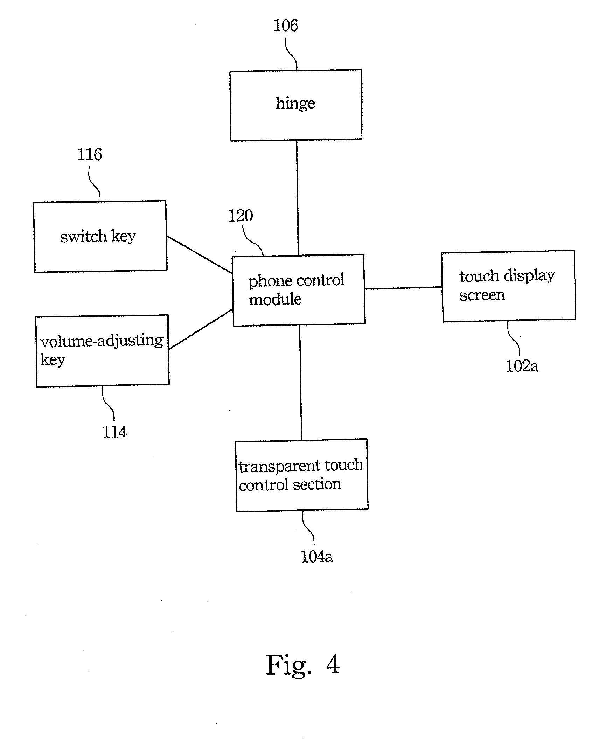

Fig. 4 illustrates a control block diagram of a portable electronic device according to one preferred embodiment of this invention. In order to make the portable electronic device function properly on the telephone communication, a phone control module 120 is thus implemented. The phone control module 120 may be implemented by software or an integrated circuit within the portable electronic device. The phone control module 120 is electrically connected to all remaining components to execute various telephone functions. The phone control module 120 is electrically connected to the hinge 106. When the cover 104 is folded against the main body 102, the phone control module 120 would enable the touch display screen 102a to display telephone function keys, i.e. "0∼9", "#", " * " and etc., and a touch control function of the transparent touch control section 104a. In contrast, when the cover 104 is unfolded away from the main body 102, the phone control module 120 would enable the touch display screen 102a to display normal function patterns other than telephone function keys and disable a touch control function of the transparent touch control section 104a. In addition, the phone control module 120 is electrically connected to the volume-adjusting key 114 for receiving the order as to adjust the sound loudness. The phone control module 120 is electrically connected to the switch key 114 for receiving an enabling or disabling order as to the transparent touch control section 104a.

According to discussed embodiments, the present invention provides a portable electronic device having its main body and cover both equipped with a touch control section but share one common display screen. Therefore, the cover of the portable electronic device can be conveniently operated to achieve particular function, i.e. the cover has a transparent touch control section for dialing and making a phone call, without unfolding the cover and operating the touch display screen on the main body.

It will be apparent to those skilled in the art that various modifications and variations can be made to the structure of the present invention without departing from the scope or spirit of the invention. In view of the foregoing, it is intended that the present invention cover modifications and variations of this invention provided they fall within the scope of the following claims and their equivalents.

## Claims

1. A portable electronic device, comprising:
a main body having a function display section;
a cover being pivotally connected with the main body and selectively folded against or unfolded away from the main body; and
a transparent touch control section disposed on the cover,
when the cover is folded against the main body, the function display section is visible through the transparent touch control section.

2. The portable electronic device of claim 1, wherein the function display section is a touch display screen.

3. The portable electronic device of claim 2, wherein the touch display screen is a resistive touch display screen and the transparent touch control section is a capacitive touch control section.

4. The portable electronic device of claim 2, wherein the touch display screen is a resistive touch display screen and the transparent touch control section is a resistive touch control section.

5. The portable electronic device of claim 2, wherein the touch display screen is a capacitive touch display screen and the transparent touch control section is a capacitive touch control section.

6. The portable electronic device of claim 2, wherein the touch display screen is a capacitive touch display screen and the transparent touch control section is a resistive touch control section.

7. The portable electronic device of claim 1, wherein the main body has a first sound through hole, and the cover has a second sound through hole, when the cover is folded against the main body, the first sound through hole is aligned with the second sound through hole.

8. The portable electronic device of claim 7, wherein the second sound through hole has a sound-transmitting enhanced material filled within thereof.

9. The portable electronic device of claim 1, further comprising a phone control module, when the cover is folded against the main body, the phone control module displays telephone function keys by the function display section, ,the telephone function keys are visible through the transparent touch control section, and the transparent touch control section is operable for executing a telephone function.

10. The portable electronic device of claim 9, wherein the main body has a volume-adjusting key electrically connected to the phone control module for adjusting volume.

11. The portable electronic device of claim 9, wherein the main body has a switch key electrically connected to the phone control module for selectively enabling or disabling a touch control function of the transparent touch control section.
